(19) **Europäisches Patentamt / European Patent Office / Office européen des brevets**

(11) **EP 4 645 489 A1**

(12) **DEMANDE DE BREVET EUROPEEN**

(43) Date de publication:
05.11.2025 Bulletin 2025/45

(21) Numéro de dépôt: 25173456.2

(22) Date de dépôt: 30.04.2025

(51) Classification Internationale des Brevets (IPC):
*H01M 10/04* (2006.01)    *H01M 10/0587* (2010.01)
*H01M 50/107* (2021.01)    *H01M 10/0583* (2010.01)

(52) Classification Coopérative des Brevets (CPC):
H01M 10/0431; H01M 10/0422; H01M 10/045;
H01M 10/0583; H01M 10/0587; H01M 50/107

(84) Etats contractants désignés:
AL AT BE BG CH CY CZ DE DK EE ES FI FR GB
GR HR HU IE IS IT LI LT LU LV MC ME MK MT NL
NO PL PT RO RS SE SI SK SM TR
Etats d'extension désignés:
BA
Etats de validation désignés:
GE KH LA MA MD TN

(30) Priorité: 30.04.2024 FR 2404541

(71) Demandeur: SAFT
92300 Levallois-Perret (FR)

(72) Inventeurs:
• AUGUIN, Florian
33770 SALLES (FR)
• PHILIPPE, Gilles
33450 IZON (FR)
• RIGOBERT, Gérard
33370 FARGUES ST HILAIRE (FR)

(74) Mandataire: Lavoix
2, place d'Estienne d'Orves
75441 Paris Cedex 09 (FR)

(54) **ELÉMENT ÉLECTROCHIMIQUE COMPRENANT UN FAISCEAU ÉLECTROCHIMIQUE ENROULÉ EN SPIRALE ET PROCÉDÉ DE FABRICATION ASSOCIÉ**

(57) L'élément électrochimique (10) comprend un faisceau électrochimique comportant un ensemble plat (22) enroulé en spirale autour d'un axe central (A-A') et comprenant :
- une électrode négative (30) ;
- une électrode positive (60) ; et
- un séparateur (90).

L'électrode négative (30) présente une forme de profilé en U et délimitant un espace intermédiaire (38) d'électrode négative (30).

L'électrode positive (60) présente une forme de profilé en U et délimite un espace intermédiaire (68) d'électrode positive (60).

Une première partie électrochimiquement active (64) de l'électrode positive (60) s'étend dans l'espace intermédiaire (38) d'électrode négative (30) et une deuxième partie électrochimiquement active (36) de l'électrode négative (30) s'étend dans l'espace intermédiaire (68) d'électrode positive (60).

FIG.3

EP 4 645 489 A1

## Description

La présente invention concerne un élément électrochimique comprenant :

- un conteneur s'étendant selon un axe central, le conteneur comportant une paroi tubulaire externe s'étendant autour de l'axe central et délimitant un volume intérieur ; et
- un faisceau électrochimique reçu dans le volume intérieur, comportant un ensemble plat enroulé en spirale autour de l'axe central, l'ensemble plat comprenant :

  - une électrode négative;
  - une électrode positive; et
  - un séparateur séparant l'électrode négative et l'électrode positive.

Dans un tel élément électrochimique, il est connu de prévoir un surdimensionnement d'une des deux électrodes par rapport à l'autre, notamment de l'électrode négative par rapport à l'électrode positive, pour assurer une transformation électrochimique totale de la matière active de l'électrode sous-dimensionnée.

Un tel surdimensionnement a également pour but d'obtenir une certaine isolation électrique des électrodes les unes par rapport aux autres, afin d'éviter un éventuel court-circuit.

Toutefois, un tel élément électrochimique n'est pas entièrement satisfaisant. En effet, dans un tel élément électrochimique, le surdimensionnement d'une des électrodes par rapport à l'autre réduit la densité d'énergie de l'élément électrochimique, puisque la partie excédentaire d'électrode ne participe pas à la transformation d'énergie chimique en énergie électrique.

En outre, malgré ce surdimensionnement, des courts-circuits restent possibles.

Un but de l'invention est alors de proposer un élément électrochimique permettant d'améliorer la densité d'énergie de l'élément électrochimique tout en améliorant l'isolation électrique des électrodes l'une par rapport à l'autre.

A cet effet, l'invention a pour objet un élément électrochimique dans lequel :

- l'électrode négative présente une forme de profilé en U et comporte :

  - une partie principale de connexion électrique formant une base dudit U et s'étendant sensiblement perpendiculairement à l'axe central ;
  - une première partie électrochimiquement active formant une première branche dudit U et s'étendant sensiblement parallèlement à l'axe central ; et
  - une deuxième partie électrochimiquement active formant une deuxième branche dudit U et s'étendant sensiblement parallèlement à la première partie électrochimiquement active de l'électrode négative;

les première et deuxième parties électrochimiquement active de l'électrode négative délimitant entre elles un espace intermédiaire d'électrode négative;

- l'électrode positive présente une forme de profilé en U et comporte :

  - une partie principale de connexion électrique formant une base dudit U et s'étendant sensiblement perpendiculairement à l'axe central ;
  - une première partie électrochimiquement active formant une première branche dudit U et s'étendant sensiblement parallèlement à l'axe central ; et
  - une deuxième partie électrochimiquement active formant une deuxième branche dudit U et s'étendant sensiblement parallèlement à la première partie électrochimiquement active de l'électrode positive;

les première et deuxième parties électrochimiquement actives de l'électrode positive délimitant entre elles un espace intermédiaire d'électrode positive;

- la première partie électrochimiquement active de l'électrode positive s'étend dans l'espace intermédiaire d'électrode négative et la deuxième partie électrochimiquement active de l'électrode négative s'étend dans l'espace intermédiaire d'électrode positive ; et
- la deuxième partie électrochimiquement active de l'électrode positive présente une surface orthoradiale interne de l'ensemble plat orientée vers l'axe central.

La géométrie du faisceau électrochimique, notamment l'extension de la première partie électrochimiquement active de l'électrode positive dans l'espace intermédiaire d'électrode négative et l'extension de la deuxième partie électrochimiquement active de l'électrode négative dans l'espace intermédiaire d'électrode positive, et la séparation de l'électrode négative et de l'électrode positive par le séparateur permettent d'obtenir une meilleure isolation électrique des électrodes l'une par rapport à l'autre tout en évitant d'avoir recours à un surdimensionnement. La suppression du surdimensionnement entre les électrodes permet alors d'augmenter la densité d'énergie de l'élément électrochimique sans détériorer l'isolation électrique entre les deux électrodes et donc également d'augmenter la fiabilité de l'élément électrochimique.

Suivant d'autres aspects avantageux de l'invention, l'élément électrochimique comprend une ou plusieurs des caractéristiques suivantes, prises isolément ou suivant toutes les combinaisons techniquement possibles :

- les première et deuxième parties électrochimiquement actives de l'électrode négative, les première et deuxième parties électrochimiquement actives de l'électrode positive et le séparateur sont appliqués les uns contre les autres selon une direction radiale perpendiculaire à l'axe central ;
- l'élément électrochimique est tel que :

  - les première et deuxième parties électrochimiquement actives de l'électrode négative comprennent chacune une surface interne orientée vers l'espace intermédiaire d'électrode négative et une surface externe opposée à la surface interne ; et
  - le séparateur s'étend entre l'électrode positive et l'électrode négative de sorte à recouvrir la surface externe de la première partie électrochimiquement active de l'électrode négative, la surface interne de la première partie électrochimiquement active de l'électrode négative, la surface interne de la deuxième partie électrochimiquement active de l'électrode négative et la surface externe de la deuxième partie électrochimiquement active de l'électrode négative ;

- l'élément électrochimique est tel que :

  - les première et deuxième parties électrochimiquement actives de l'électrode positive comprennent chacune une surface interne orientée vers l'espace intermédiaire d'électrode positive et une surface externe opposée à ladite surface interne ; et
  - le séparateur s'étend entre l'électrode positive et l'électrode négative de sorte à recouvrir la surface externe de la première partie électrochimiquement active de l'électrode positive, la surface interne de la première partie électrochimiquement active de l'électrode positive, la surface interne de la deuxième partie électrochimiquement active de l'électrode positive et la surface externe de la deuxième partie électrochimiquement active de l'électrode positive ;

- l'élément électrochimique est tel que :

  - la première partie électrochimiquement active de l'électrode positive s'étend dans l'espace intermédiaire d'électrode négative de sorte que le séparateur soit interposé entre la première partie électrochimiquement active de l'électrode positive et chacune des première et deuxième parties électrochimiquement active de l'électrode négative;
  - la deuxième partie électrochimiquement active de l'électrode négative s'étend dans l'espace intermédiaire d'électrode positive de sorte que le séparateur soit interposé entre la deuxième partie électrochimiquement active de l'électrode négative et chacune des première et deuxième parties électrochimiquement actives de l'électrode positive ;

- l'élément électrochimique est tel que :

  - la partie principale de connexion électrique de l'électrode négative comprend :

    - une première surface orientée vers l'espace intermédiaire d'électrode négative ; et
    - une deuxième surface opposée à la première surface, ladite deuxième surface étant en contact électrique avec un premier organe de connexion électrique de l'élément électrochimique ;

  - la partie principale de connexion électrique de l'électrode positive comprend :

    - une première surface orientée vers l'espace intermédiaire d'électrode positive; et
    - une deuxième surface opposée à la première surface, ladite deuxième surface étant en contact électrique avec un deuxième organe de connexion électrique de l'élément électrochimique ;
    - l'élément électrochimique comprend le premier organe de connexion électrique et le deuxième organe de connexion électrique, le premier organe de connexion électrique étant agencé à une première extrémité du conteneur selon l'axe central, le deuxième organe de connexion électrique étant agencé à une deuxième extrémité du conteneur selon l'axe central, opposée à la première extrémité ;
    - l'élément électrochimique est tel que :

  - l'électrode négative comprend :

    - un premier feuillard métallique formant un collecteur de courant de l'électrode négative, présentant une forme de profilé en U et comprenant :

      - une portion centrale formant la partie principale de connexion électrique de l'électrode négative ; et
      - deux portions latérales formant respectivement au moins partiellement les première et deuxième parties électrochimiquement actives de l'électrode négative ;

- une première couche de matière électrochimiquement active recouvrant au moins partiellement les deux portions latérales du premier feuillard métallique et formant au moins partiellement les première et deuxième parties électrochimiquement active de l'électrode négative;

- l'électrode positive comprend :

- un deuxième feuillard métallique formant un collecteur de courant de l'électrode positive, présentant une forme de profilé en U et comprenant :

- une portion centrale formant la partie principale de connexion électrique de l'électrode positive ; et
- deux portions latérales formant respectivement au moins partiellement les première et deuxième parties électrochimiquement actives de l'électrode positive ;

- une deuxième couche de matière électrochimiquement active recouvrant au moins partiellement les deux portions latérales du deuxième feuillard métallique et formant au moins partiellement les première et deuxième parties électrochimiquement actives de l'électrode positive ;
- l'ensemble plat présente une surface orthoradiale externe opposée à la surface orthoradiale interne de l'ensemble plat, la surface orthoradiale externe de l'ensemble plat étant formée par une portion du séparateur ;
- l'élément électrochimique est tel que :

- l'ensemble plat du faisceau électrochimique s'étend entre un bord interne orienté vers l'axe central et un bord externe opposé au bord interne ; et
- une portion rectangulaire de la deuxième partie électrochimiquement active de l'électrode positive étant découpée depuis le bord interne de l'ensemble plat de sorte qu'un bord interne de la surface orthoradiale interne de l'ensemble plat soit formé par le séparateur.

L'invention concerne en outre un procédé de fabrication d'un élément électrochimique tel que décrit ci-dessus, comprenant les étapes suivantes :

a) fourniture du conteneur, de l'électrode négative, de l'électrode positive et du séparateur, l'électrode négative, l'électrode positive et le séparateur étant chacun sous une forme plane ;
b) agencement de l'électrode négative de sorte que

l'électrode négative s'étende selon un plan horizontal défini par une direction longitudinale et une direction transversale ;
c) agencement du séparateur sur l'électrode négative de sorte que :

- l'électrode négative s'étende sensiblement parallèlement au plan horizontal, les parties électrochimiquement actives de l'électrode négative s'étendant de part et d'autre de la partie principale de connexion électrique de l'électrode négative selon la direction transversale ;
- le séparateur soit empilé sur l'électrode négative selon une direction d'élévation perpendiculaire aux directions longitudinale et transversale ; et
- l'électrode négative soit centrée selon la direction transversale par rapport au séparateur;

d) agencement de l'électrode positive sur le séparateur de sorte que :

- l'électrode positive s'étende sensiblement parallèlement au plan horizontal, les parties électrochimiquement actives de l'électrode positive s'étendant de part et d'autre de la partie principale de connexion électrique de l'électrode positive selon la direction transversale ;
- l'électrode positive soit empilée sur le séparateur; et
- la première partie électrochimiquement active de l'électrode positive soit agencée en regard de la deuxième partie électrochimiquement active de l'électrode négative ;

e) rabattement de la première partie électrochimiquement active de l'électrode négative sur la première partie électrochimiquement active de l'électrode positive par rotation de la première partie électrochimiquement active de l'électrode négative selon un premier axe de rotation sensiblement parallèle à la direction longitudinale, de sorte que la première partie électrochimiquement active de l'électrode positive s'étende dans l'espace intermédiaire d'électrode négative ;
f) rabattement de la deuxième partie électrochimiquement active de l'électrode positive sur la deuxième partie électrochimiquement active de l'électrode négative par rotation de la deuxième partie électrochimiquement active de l'électrode positive selon un deuxième axe de rotation sensiblement parallèle à la direction longitudinale de sorte que la deuxième partie électrochimiquement active de l'électrode négative s'étende dans l'espace intermédiaire d'électrode positive ;
g) enroulement de l'ensemble plat en spirale autour d'un axe de rotation principal sensiblement parallèle à la direction transversale ;
h) agencement de l'ensemble plat enroulé dans le volume intérieur du conteneur de sorte que l'axe de rotation principal soit sensiblement parallèle à l'axe central du conteneur.

Suivant d'autres aspects avantageux de l'invention, l'élément électrochimique comprend une ou plusieurs des caractéristiques suivantes, prises isolément ou suivant toutes les combinaisons techniquement possibles :

- le procédé comprend en outre :

    - entre les étapes d) et e), une étape de rabattement d'une portion du séparateur sur une surface inférieure de la première partie électrochimiquement active de l'électrode négative, la surface inférieure de la première partie électrochimiquement active de l'électrode négative correspondant à une surface externe de la première partie électrochimiquement active de l'électrode négative, opposée à une surface interne de la première partie électrochimiquement active de l'électrode négative orientée vers l'espace intermédiaire d'électrode négative ;
    - lors de l'étape e), la première partie électrochimiquement active de l'électrode négative et une portion de séparateur correspondante sont rabattues sur la première partie électrochimiquement active de l'électrode positive, de sorte que le séparateur recouvre une surface supérieure de la première partie électrochimiquement active de l'électrode positive correspondant à une surface externe de la première partie électrochimiquement active de l'électrode positive, opposée à une surface interne de la première partie électrochimiquement active de l'électrode positive orientée vers l'espace intermédiaire d'électrode positive ;
    - lors de l'étape f), la deuxième partie électrochimiquement active de l'électrode positive et une portion de séparateur correspondante sont rabattues sur la deuxième partie électrochimiquement active de l'électrode négative, de sorte que le séparateur recouvre une surface inférieure de la deuxième partie électrochimiquement active de l'électrode négative correspondant à une surface externe de la deuxième partie électrochimiquement active de l'électrode négative, opposée à une surface interne de la deuxième partie électrochimiquement active de l'électrode négative orientée vers l'espace intermédiaire d'électrode négative ;
    - les étapes e) et f) sont telles que :

        - la partie principale de connexion électrique de l'électrode négative comprend :

            - une première surface orientée vers l'espace intermédiaire d'électrode négative ; et
            - une deuxième surface opposée à ladite première surface, ladite deuxième surface étant en contact électrique avec un premier organe de connexion électrique de l'élément électrochimique ;

    - la partie principale de connexion électrique de l'électrode positive comprend :

        - une première surface orientée vers l'espace intermédiaire d'électrode positive ; et
        - une deuxième surface opposée à ladite première surface, ladite deuxième surface étant en contact électrique avec un deuxième organe de connexion électrique de l'élément électrochimique ;

le procédé étant en outre tel que la deuxième surface de la partie principale de connexion électrique de l'électrode négative est en contact électrique avec le premier organe de connexion électrique de l'élément électrochimique et la deuxième surface de la partie principale de connexion électrique de l'électrode positive est en contact électrique avec le deuxième organe de connexion électrique de l'élément électrochimique ;

- après l'étape h), l'ensemble plat du faisceau électrochimique s'étend entre un bord interne orienté vers l'axe central et un bord externe opposé au bord interne, et dans lequel entre les étapes f) et g), une portion rectangulaire de la deuxième partie électrochimiquement active de l'électrode positive est découpée depuis le bord interne de l'ensemble plat de sorte qu'un bord interne de la surface orthoradiale interne de l'ensemble plat soit formé par le séparateur.

L'invention apparaîtra plus clairement à la lecture de la description qui va suivre, donnée uniquement à titre d'exemple non limitatif, et faite en référence aux dessins dans lesquels :

[Fig. 1] la figure 1 est une représentation schématique simplifiée en vue de côté d'un premier mode de réalisation d'un élément électrochimique selon l'invention, dans lequel les organes de connexion électriques sont représentés séparés du faisceau électrochimique et du conteneur ;
[Fig. 2] la figure 2 est une représentation schématique simplifiée du faisceau électrochimique de la figure 1 selon deux points de vue illustrant les deux extrémités axiales du faisceau ;
[Fig. 3] la figure 3 est une représentation schématique simplifiée d'une portion d'une coupe du faisceau électrochimique de la figure 1, selon un plan de coupe comprenant l'axe central, montrant la superposition de deux circonvolutions successives de l'ensemble plat dans l'état enroulé en spirale de l'ensemble plat ;

[Fig. 4] la figure 4 est une représentation schématique simplifiée du faisceau électrochimique de la figure 1 après les étapes a), b), c) et d) d'un procédé selon l'invention ;

[Fig. 5] la figure 5 est une représentation schématique simplifiée du faisceau électrochimique de la figure 4 après une étape du procédé selon l'invention, dans laquelle une portion du séparateur est rabattue sur une surface inférieure de la première partie électrochimiquement active de l'électrode négative ;

[Fig. 6] la figure 6 est une représentation schématique simplifiée du faisceau électrochimique de la figure 5 après l'étape e) du procédé selon l'invention ;

[Fig. 7] la figure 7 est une représentation schématique simplifiée du faisceau électrochimique de la figure 6 après l'étape f) du procédé selon l'invention ;

[Fig. 8] la figure 8 est une représentation schématique simplifiée du faisceau électrochimique de la figure 6 après une étape du procédé selon l'invention, dans laquelle après l'étape f), une portion rectangulaire de la deuxième partie électrochimiquement active de l'électrode positive est découpée depuis le bord interne de l'ensemble plat ;

[Fig. 9] la figure 9 est un ordinogramme illustrant un procédé de fabrication de l'élément électrochimique de la figure 1 ;

[Fig. 10] la figure 10 est une représentation schématique simplifiée en vue de côté d'un deuxième mode de réalisation d'un élément électrochimique selon l'invention, dans lequel les organes de connexion électriques sont représentés séparés du faisceau électrochimique et du conteneur ;

[Fig. 11] la figure 11 est une représentation schématique simplifiée en vue de côté d'un troisième mode de réalisation d'un élément électrochimique selon l'invention, dans lequel un organe de connexion électrique est représenté séparé du faisceau électrochimique et du conteneur et un autre organe de connexion électrique est représenté connecté au faisceau électrochimique et au conteneur.

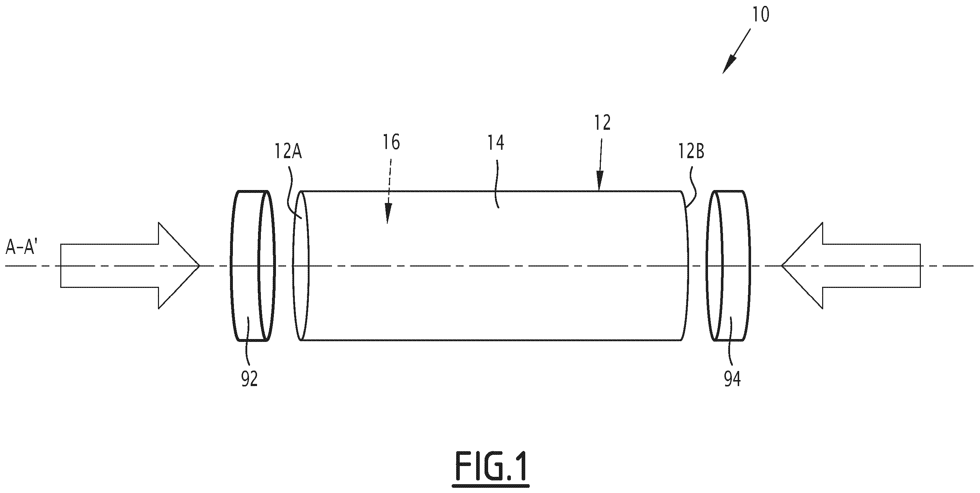

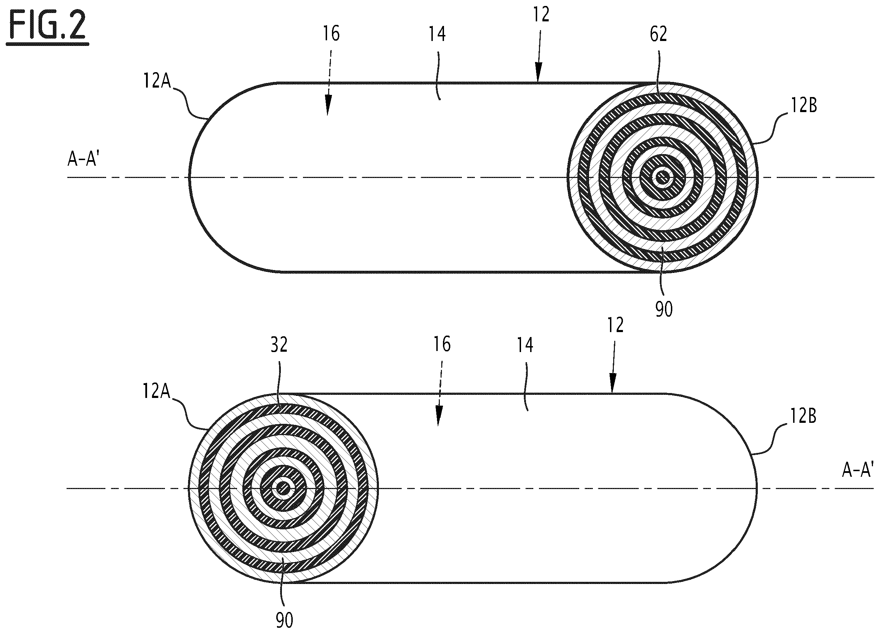

En référence aux figures 1 à 3, on décrit un premier mode de réalisation d'un élément électrochimique 10 selon l'invention.

L'élément électrochimique 10 est notamment de type cylindrique.

L'élément électrochimique 10 comprend un conteneur 12 et un faisceau électrochimique 20.

Avantageusement, l'élément électrochimique 10 comprend en outre un premier organe de connexion électrique 92 et un deuxième organe de connexion électrique 94.

Le conteneur 12 s'étend selon un axe central A-A'.

Le conteneur 12 comporte une paroi tubulaire externe 14 s'étendant autour de l'axe central A-A'. Selon l'exemple illustré sur la figure 1, la paroi tubulaire externe 14 est une paroi cylindrique, notamment à section droite circulaire.

La paroi tubulaire externe 14 délimite un volume intérieur 16.

Avantageusement, la paroi tubulaire externe 14 est réalisée en aluminium ou alliage d'aluminium. En variante, la paroi tubulaire externe 14 est réalisée en acier inoxydable.

Le faisceau électrochimique 20 est reçu dans le volume intérieur 16.

Le faisceau électrochimique 20 comporte un ensemble plat 22 enroulé en spirale autour de l'axe central A-A'.

L'ensemble plat 22 comprend une électrode négative 30, une électrode positive 60 et un séparateur 90 séparant l'électrode négative 30 et l'électrode positive 60.

Par « électrode négative », on entend une électrode fonctionnant en anode lorsque l'élément électrochimique est en décharge et en cathode lorsque l'élément électrochimique est en charge. Par « électrode positive », on entend une électrode fonctionnant en cathode lorsque l'élément électrochimique est en décharge et en anode lorsque l'élément électrochimique est en charge.

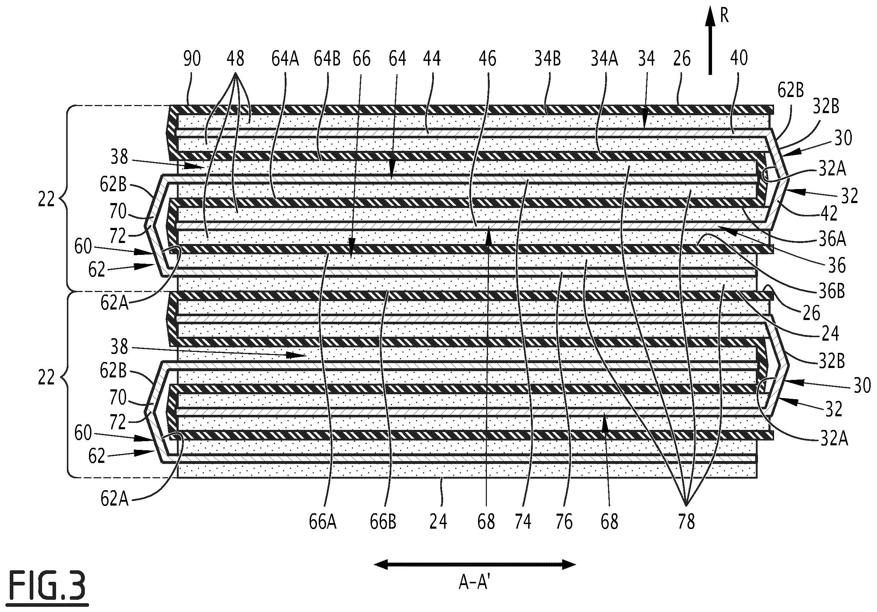

En outre, l'ensemble plat 22 comprend une surface orthoradiale interne 24 orientée vers l'axe central A-A' et une surface orthoradiale externe 26 opposée à la surface orthoradiale interne 24 (voir la figure 3).

Avantageusement, comme détaillé plus bas, la surface orthoradiale externe 26 de l'ensemble plat 22 est formée par une portion du séparateur 90.

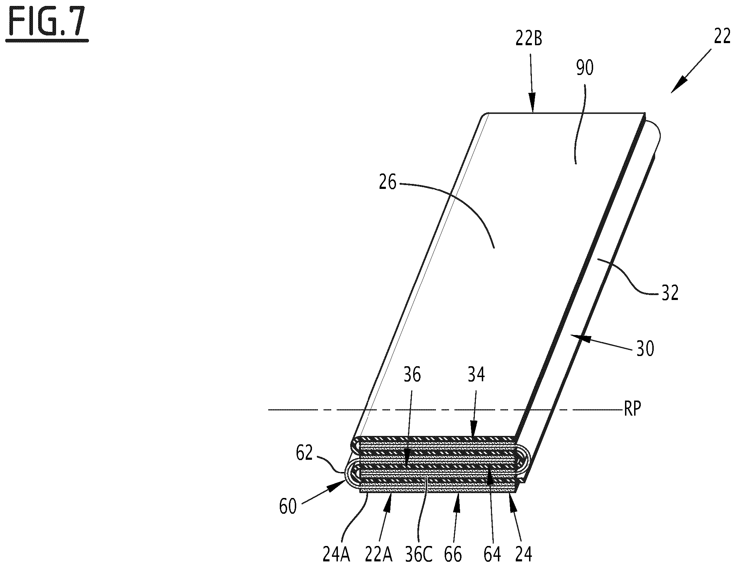

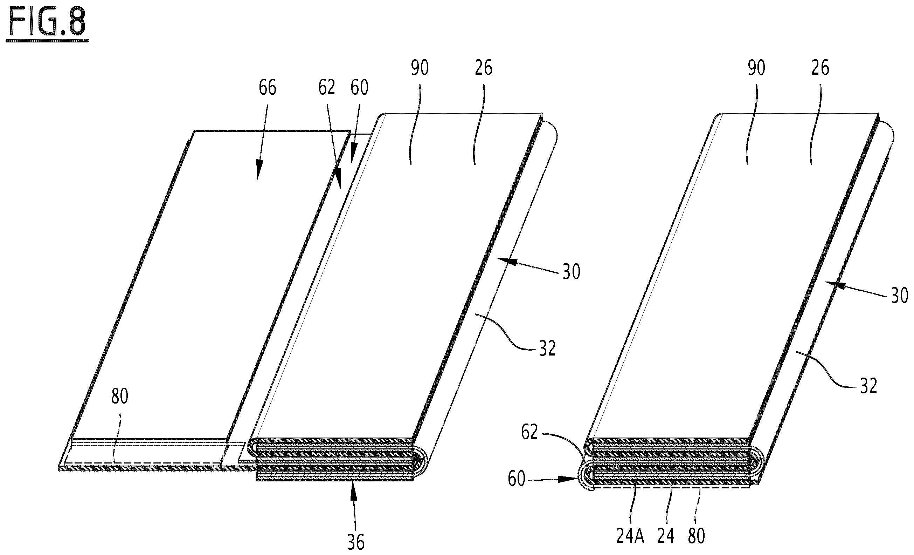

Encore avantageusement, en référence aux figures 7 et 8, l'ensemble plat 22 s'étend entre un bord interne 22A orienté vers l'axe central A-A' et un bord externe 22B opposé au bord interne 22A. En particulier, dans l'état enroulé en spirale de l'ensemble plat 22, le bord interne 22A de l'ensemble plat 22 est agencé le long de l'axe central A-A' et le bord externe 22B de l'ensemble plat 22 est agencé radialement excentré par rapport à l'axe central A-A', notamment en périphérie du faisceau électrochimique 20.

En référence à la figure 3, l'électrode négative 30 et l'électrode positive 60 sont agencées en quinconce.

Toujours en référence à la figure 3, l'électrode négative 30 présente une forme de profilé en U, notamment enroulé en spirale autour de l'axe central A-A'. En d'autres termes, une section droite de l'électrode négative 30 (visible sur la figure 3) présente une forme de U.

L'électrode négative 30 comporte une partie principale de connexion électrique 32, une première partie électrochimiquement active 34 et une deuxième partie électrochimiquement active 36.

En outre, avantageusement, l'électrode négative 30 comprend un premier feuillard métallique 40 et une première couche 48 de matière électrochimiquement active.

La partie principale de connexion électrique 32 de l'électrode négative 30 forme une base du U et s'étend sensiblement perpendiculairement à l'axe central A-A'.

Avantageusement, comme détaillé plus bas, la partie principale de connexion électrique 32 de l'électrode négative 30 est formée par le premier feuillard métallique 40, notamment par une portion centrale 42 du premier feuillard métallique 40.

Avantageusement, la partie principale de connexion électrique 32 de l'électrode négative 30 comprend une première surface 32A orientée vers un espace intermédiaire 38 d'électrode négative 30 et une deuxième surface 32B opposée à la première surface 32A.

La deuxième surface 32B est en contact électrique avec le premier organe de connexion électrique 92.

La première partie électrochimiquement active 34 de l'électrode négative 30 forme une première branche du U et s'étend sensiblement parallèlement à l'axe central A-A.

La première partie électrochimiquement active 34 de l'électrode négative 30 comprend une surface interne 34A orientée vers l'espace intermédiaire 38 d'électrode négative 30 et une surface externe 34B opposée à la surface interne 34A.

Avantageusement, comme détaillé plus bas, la première partie électrochimiquement active 34 de l'électrode négative 30 est formée en partie par le premier feuillard métallique 40, notamment par une portion latérale 44 du premier feuillard métallique 40, et en partie par la première couche 48 de matière électrochimiquement active.

La deuxième partie électrochimiquement active 36 de l'électrode négative 30 forme une deuxième branche du U et s'étend sensiblement parallèlement à la première partie électrochimiquement active 34 de l'électrode négative 30.

En outre, la deuxième partie électrochimiquement active 36 de l'électrode négative 30 s'étend dans un espace intermédiaire 68 d'électrode positive 60, notamment de sorte que le séparateur 90 soit interposé entre la deuxième partie électrochimiquement active 36 de l'électrode négative 30 et chacune de première et deuxième parties électrochimiquement actives 64, 66 de l'électrode positive 60.

La deuxième partie électrochimiquement active 36 de l'électrode négative 30 comprend une surface interne 36A orientée vers l'espace intermédiaire 38 d'électrode négative 30 et une surface externe 36B opposée à la surface interne 36A.

Avantageusement, comme détaillé plus bas, la deuxième partie électrochimiquement active 36 de l'électrode négative 30 est formée en partie par le premier feuillard métallique 40, notamment par une portion latérale 46 du premier feuillard métallique 40, et en partie par la première couche 48 de matière électrochimiquement active.

Les première et deuxième parties électrochimiquement actives 34, 36 de l'électrode négative 30 délimitent entre elles l'espace intermédiaire 38 d'électrode négative 30.

Le premier feuillard métallique 40 forme un collecteur de courant de l'électrode négative 30.

Le premier feuillard métallique 40 présente une forme de profilé en U.

Le premier feuillard métallique 40 comprend la portion centrale 42 et les deux portions latérales 44, 46.

La portion centrale 42 du premier feuillard métallique 40 forme la partie principale de connexion électrique 32 de l'électrode négative 30.

Avantageusement, la portion centrale 42 du premier feuillard métallique 40 est en contact électrique avec le premier organe de connexion électrique 92.

Les deux portions latérales 44, 46 du premier feuillard métallique 40 forment respectivement au moins partiellement les première et deuxième parties électrochimiquement actives 34, 36 de l'électrode négative 30.

Par exemple, le premier feuillard métallique 40 est réalisé en cuivre ou en un alliage de cuivre ou en aluminium ou en alliage d'aluminium.

Par exemple, le premier feuillard métallique 40 est plein ou perforé.

Par exemple, l'épaisseur du premier feuillard métallique 40 est comprise entre 6 $\mu$m et 30 $\mu$m, de préférence entre 5 $\mu$m et 20 $\mu$m, encore de préférence entre 10 $\mu$m et 15 $\mu$m.

La première couche 48 de matière électrochimiquement active recouvre au moins partiellement les deux portions latérales 44, 46 du premier feuillard métallique 40.

La première couche 48 de matière électrochimiquement active forme au moins partiellement les première et deuxième parties électrochimiquement actives 34, 36 de l'électrode négative 30.

Avantageusement, comme illustré sur l'exemple de la figure 3, la première couche 48 de matière électrochimiquement active recouvre chaque face de chacune des deux portions latérales 44, 46 du premier feuillard métallique 40.

Par exemple, la matière électrochimiquement active de la première couche 48, autrement dit la matière active négative, est une matière active négative connue dans la technologie des éléments électrochimiques de type Li-ion.

Par exemple, la matière active négative comprend un matériau actif d'électrode négative et/ou un ou des liants et/ou un matériau conducteur électrique. Le matériau actif d'électrode négative n'est pas particulièrement limité. Il peut être choisi dans les groupes suivants et leurs mélanges :

- lithium métallique ou alliage de lithium métallique ;
- graphite ;
- silicium ;
- de type anode-free ;
- oxyde de titane et de niobium de type TNO ;
- oxyde de titane lithié ou oxyde de titane capable d'être lithié, de type LTO.

Des exemples d'oxydes de titane lithiés sont la spinelle $Li_4Ti_5O_{12}$, $Li_2TiO_3$, la ramsdellite $Li_2Ti_3O_7$, $LiTi_2O_4$, $Li_xTi_2O_4$, avec $0<x\leq2$ et $Li_2Na_2Ti_6O_{14}$.

Un composé LTO préféré a pour formule $Li_{4-a}M_aTi_{5-b}M'_bO_4$, par exemple $Li_4Ti_5O_{12}$ qui s'écrit encore $Li_{4/3}Ti_{5/3}O_4$.

Toujours en référence à la figure 3, l'électrode positive 60 présente une forme de profilé en U, notamment enroulé en spirale autour de l'axe central A-A'. En d'autres termes, une section droite de l'électrode positive 60 (visible sur la figure 3) présente une forme de U.

L'électrode positive 60 comporte une partie principale de connexion électrique 62, la première partie électrochimiquement active 64 et la deuxième partie électrochimiquement active 66.

En outre, avantageusement, l'électrode positive 60 comprend un deuxième feuillard métallique 70 et une deuxième couche 78 de matière électrochimiquement active.

La partie principale de connexion électrique 62 de l'électrode positive 60 forme une base du U et s'étend sensiblement perpendiculairement à l'axe central A-A'.

Avantageusement, comme détaillé plus bas, la partie principale de connexion électrique 62 de l'électrode positive 60 est formée par le deuxième feuillard métallique 70, notamment une portion centrale 72 du deuxième feuillard métallique 70.

Avantageusement, la partie principale de connexion électrique 62 de l'électrode positive 60 comprend une première surface 62A orientée vers l'espace intermédiaire 68 d'électrode positive 60 et une deuxième surface 62B opposée à la première surface 62A.

La deuxième surface 62B est en contact électrique avec le deuxième organe de connexion électrique 94.

La première partie électrochimiquement active 64 de l'électrode positive 60 forme une première branche du U et s'étend sensiblement parallèlement à l'axe central A-A'.

En outre, la première partie électrochimiquement active 64 de l'électrode positive 60 s'étend dans l'espace intermédiaire 38 d'électrode négative 30 notamment de sorte que le séparateur 90 soit interposé entre la première partie électrochimiquement active 64 de l'électrode positive 60 et chacune des première et deuxième parties électrochimiquement actives 34, 36 de l'électrode négative 30.

En d'autres termes, les parties électrochimiquement actives 34, 36 de l'électrode négative 30 et les parties électrochimiquement actives 64, 66 de l'électrode positive 60 sont agencées en quinconce, le séparateur étant interposé entre l'électrode négative 30 et l'électrode positive 60 de sorte à isoler électriquement les parties électrochimiquement actives 34, 36 de l'électrode négative 30 d'une part et les parties électrochimiquement actives 64, 66 d'autre part.

La première partie électrochimiquement active 64 de l'électrode positive 60 comprend une surface interne 64A orientée vers l'espace intermédiaire 68 d'électrode positive 60 et une surface externe 64B opposée à la surface interne 64A.

Avantageusement, comme détaillé plus bas, la première partie électrochimiquement active 64 de l'électrode positive 60 est formée en partie par le deuxième feuillard métallique 70, notamment par une portion latérale 74 du deuxième feuillard métallique 70, et en partie par la deuxième couche 78 de matière électrochimiquement active.

La deuxième partie électrochimiquement active 66 de l'électrode positive 60 forme une deuxième branche du U et s'étend sensiblement parallèlement à la première partie électrochimiquement active 64 de l'électrode positive 60.

En outre, la deuxième partie électrochimiquement active 66 de l'électrode positive 60 présente la surface orthoradiale interne 24 de l'ensemble plat 22.

La deuxième partie électrochimiquement active 66 de l'électrode positive 60 comprend une surface interne 66A orientée vers l'espace intermédiaire 68 d'électrode positive 60 et une surface externe 66B opposée à la surface interne 66A. En particulier, la surface externe 66B de la deuxième partie électrochimiquement active 66 de l'électrode positive 60 correspond au moins en partie à la surface orthoradiale interne 24 de l'ensemble plat 22.

Avantageusement, comme détaillé plus bas, la deuxième partie électrochimiquement active 66 de l'électrode positive 60 est formée en partie par le deuxième feuillard métallique 70, notamment par une portion latérale 76 du deuxième feuillard métallique 70, et en partie par la deuxième couche 78 de matière électrochimiquement active.

Encore avantageusement, en référence à la figure 8, une portion rectangulaire 80 de la deuxième partie électrochimiquement active 66 de l'électrode positive 60 est découpée depuis le bord interne 22A de l'ensemble plat 22 de sorte qu'un bord interne 24A de la surface orthoradiale interne 24 de l'ensemble plat 22 soit formé par le séparateur 90. Ainsi, la périphérie de l'ensemble plat 22 enroulé en spirale est formée par le séparateur 90 et la partie la plus centrale de l'ensemble plat 22 enroulé en spirale (c'est-à-dire celle agencé le long de l'axe centrale A-A') est également formée par le séparateur 90.

Les première et deuxième parties électrochimiquement actives 64, 66 de l'électrode positive 60 délimitent entre elles l'espace intermédiaire 68 d'électrode positive 60.

Le deuxième feuillard métallique 70 forme un collecteur de courant de l'électrode positive 60.

Le deuxième feuillard métallique 70 présente une forme de profilé en U.

Le deuxième feuillard métallique 70 comprend la portion centrale 72 et les deux portions latérales 74, 76.

La portion centrale 72 du deuxième feuillard métallique 70 forme la partie principale de connexion électrique 62 de l'électrode positive 60.

Avantageusement, la portion centrale 72 du deuxième feuillard métallique 70 est en contact électrique avec le deuxième organe de connexion électrique 94.

Les deux portions latérales 74, 76 du deuxième feuillard métallique 70 forment respectivement au moins partiellement les première et deuxième parties électrochimiquement actives 64, 66 de l'électrode positive 60.

Par exemple, le deuxième feuillard métallique 70 est réalisé en aluminium ou en alliage d'aluminium ou en acier ou en acier inoxydable.

Par exemple, le deuxième feuillard métallique 70 est plein ou perforé.

Par exemple, l'épaisseur du deuxième feuillard métallique 70 est comprise entre 6 $\mu$m et 30 $\mu$m, de préférence entre 5 $\mu$m et 20 $\mu$m, encore de préférence entre 10 $\mu$m et 15 $\mu$m.

La deuxième couche 78 de matière électrochimiquement active recouvre au moins partiellement les deux portions latérales 74, 76 du deuxième feuillard métallique 70.

La deuxième couche 78 de matière électrochimiquement active forme au moins partiellement les première et deuxième parties électrochimiquement actives 64, 66 de l'électrode positive 60.

Avantageusement, comme illustré sur l'exemple de la figure 3, la deuxième couche 78 de matière électrochimiquement active recouvre chaque face de chacune des deux portions latérales 74, 76 du deuxième feuillard métallique 70.

Par exemple, la matière électrochimiquement active de la deuxième couche 78, autrement dit la matière active positive, est une matière active positive connue dans la technologie des éléments électrochimiques de type Li-ion.

Par exemple, la matière active positive est un oxyde lithié d'au moins un métal de transition, une matière active de type LVPF ou un phosphate lithié d'au moins un métal de transition.

L'oxyde lithié d'au moins un métal de transition est par exemple choisi parmi :

i) un oxyde lithié de nickel, manganèse et cobalt de formule $Li_w(Ni_xMn_yCo_zM_t)O_2$ (NMC) où :

-

$0,9 \leq w \leq 1,1$ ;

-

$0 < x$ ;

-

$0 < y$ ;

-

$0 < z$ ;

-

$0 \leq t$ ;

- M est choisi dans le groupe constitué de Al, B, Mg, Si, Ca, Ti, V, Cr, Fe, Cu, Zn, Y, Zr, Nb, W, Mo, S, Sr, Ce, Ta, Ga, Nd, Pr, La et des mélanges de ceux-ci ;

ii) un oxyde lithié de nickel, cobalt et aluminium de formule $Li_w(Ni_xCo_yAl_zM_t)O_2$ (NCA) où :

-

$0,9 \leq w \leq 1,1$ ;

-

$0 < x$ ;

-

$0 < y$ ;

-

$0 < z$ ;

-

$0 \leq t$ ;

- M est choisi dans le groupe constitué de Al, B, Mg, Si, Ca, Ti, V, Cr, Mn, Fe, Cu, Zn, Y, Zr, Nb, W, Mo, S, Sr, Ce, Ta, Ga, Nd, Pr, La et des mélanges de ceux-ci ;

iii) un composé de formule $Li_{1+x}M_{1-x}O_{2-y}F_y$ de structure cristalline cubique où :

-

$0 \leq x \leq 0,5$ ;

- 

$0 \leq y \leq 1$ ;

et
- M représente un élément choisi dans le groupe constitué de Na, K, Mg, Ca, B, Sc, Ti, V, Cr, Mn, Fe, Co, Ni, Cu, Zn, Al, Y, Zr, Nb, Mo, Ru, Ag, Sn, Sb, Ta, W, Bi, La, Pr, Eu, Nd et Sm et des mélanges de ceux-ci ;

iv) un oxyde lithié de nickel et de manganèse (NMX) de formule $Li_a(Ni_{1-x-y-z}Mn_xCo_yM_z)O_2$ avec :

- 

$0,9 \leq a \leq 1,1$ ;

- 

$0,60 \leq 1-x-y-z < 0,80$ ;

- 

$0 < x$ ;

- 

$0 \leq y \leq 0,02$ ;

- 

$0 \leq z$ ;

et
- M est choisi dans le groupe consistant en Al, B, Mg, Si, Ca, Ti, V, Cr, Fe, Cu, Zn, Y, Zr, Nb, W, Mo, S, Sr, Ce, Ga, Ta, Nd, Pr, La et des mélanges de ceux-ci ;

v) un oxyde lithié de nickel et de manganèse de formule $Li_w(Ni_xMn_yCo_zM_t)O_2$ où :

- 

$1,1 < w \leq 1,6$ ;

- 

$0 < x$ ;

- 

$0,50 \leq y < 0,80$ ;

- 

$0 \leq z \leq 0,02$ ;

- 

$0 \leq t$ ;

- M est choisi dans le groupe constitué de Al, B, Mg, Si, Ca, Ti, V, Cr, Fe, Cu, Zn, Y, Zr, Nb, W, Mo, S, Sr, Ce, Ta, Ga, Nd, Pr, La et des mélanges de ceux-ci ;

vi) un oxyde lithié de nickel et de manganèse de formule $Li_xMn_{2-y-z}M'_yM''_zO_{4-\delta}$ où :

- M' et M" sont choisis dans le groupe consistant en B, Mg, Al, Si, Ca, Ti, V, Cr, Fe, Co, Ni, Cu, Zn, Y, Zr, Nb et Mo ;.
- M' et M" sont différents l'un de l'autre ;
- 

$1 \leq x \leq 1,4$ ;

- 

$0 \leq y \leq 0,6$ ;

- 

$0 \leq z \leq 0,2$ ;

- 

$0 \leq \delta \leq 1$.

Les matières actives de type LVPF répondent à la formule $Li_{1+x}V_{1-y}M_yPO_4F_z$ avec :

- 

$0 \leq x \leq 0,15$ ;

- 

$0 \leq y \leq 0,5$ ;

- 

$0.8 \leq z \leq 1,2$ ;

et
- M est choisi parmi le groupe consistant en Ti, Al, Mg, Mn, Fe, Co, Y, Cr, Cu, Ni et Zr.

Le phosphate lithié d'au moins un métal de transition est par exemple choisi parmi :

α) un phosphate lithié de fer de formule $Li_xFe_{1-y}M_yPO_4$ (LFP), où :

-

$$0,8 \leq x \leq 1,2 \; ;$$

-

$$0 \leq y \leq 0,6 \; ;$$

et
- M est choisi dans le groupe consistant en Al, B, Mg, K, Si, Ca, Ti, V, Cr, Co, Cu, Mn, Ni, Zn, Y, Zr, Nb, W, Pb, Mo, S et des mélanges de ceux-ci ;

β) un phosphate lithié de manganèse de formule $Li_xMn_{1-y}M_yPO_4$ (LMP), où : -

-

$$0,8 \leq x \leq 1,2 \; ;$$

-

$$0 \leq y \leq 0,6 \; ;$$

et
- M est choisi dans le groupe consistant en Al, B, Mg, K, Si, Ca, Ti, V, Cr, Co, Cu, Fe, Ni, Zn, Y, Zr, Nb, W, Pb, Mo, S et des mélanges de ceux-ci ;

γ) un phosphate lithié de manganèse et de fer de formule : $Li_xMn_{1-y-z}Fe_yM_zPO_4$ (LMFP) où :

-

$$0,8 \leq x \leq 1,2 \; ;$$

-

$$0,5 \leq 1-y-z < 1 \; ;$$

-

$$0 < y+z \leq 0,5 \; ;$$

-

$$0 < y \leq 0,50 \; ;$$

et
-

$$0 \leq z \leq 0,2 \; ;$$

et
- M est choisi dans le groupe constitué de Al, B, Mg, K, Si, Ca, Ti, V, Cr, Co, Cu, Ni, Zn, Y, Zr, Nb, W, Pb, Mo, S et des mélanges de ceux-ci ; et

δ) des mélanges de différents composés des catégories i) à vi) et α) à γ).

Comme illustré sur l'exemple de la figure 3, les première et deuxième parties électrochimiquement actives 34, 36 de l'électrode négative 30, les première et deuxième parties électrochimiquement actives 64, 66 de l'électrode positive 60 et le séparateur 90 sont appliqués les uns contre les autres selon une direction radiale R perpendiculaire à l'axe central A-A'. Autrement dit, les première et deuxième parties électrochimiquement actives 34, 36 de l'électrode négative 30, les première et deuxième parties électrochimiquement actives 64, 66 de l'électrode positive 60 et le séparateur 90 forment un ensemble compact selon la direction radiale R.

Le séparateur 90 s'étend entre l'électrode positive 60 et l'électrode négative 30 de sorte à recouvrir :

- la surface externe 34B de la première partie électrochimiquement active 34 de l'électrode négative 30 ;
- la surface interne 34A de la première partie électrochimiquement active 34 de l'électrode négative 30 ;
- la surface interne 36A de la deuxième partie électrochimiquement active 36 de l'électrode négative 30 ; et
- la surface externe 36B de la deuxième partie électrochimiquement active 36 de l'électrode négative 30.

Avantageusement, le séparateur 90 s'étend en outre entre l'électrode positive 60 et l'électrode négative 30 de sorte à recouvrir :

- la surface externe 64B de la première partie électrochimiquement active 64 de l'électrode positive 60 ;
- la surface interne 64A de la première partie électrochimiquement active 64 de l'électrode positive 60 ;
- la surface interne 66A de la deuxième partie électrochimiquement active 66 de l'électrode positive 60 ; et
- la surface externe 66B de la deuxième partie électrochimiquement active 66 de l'électrode positive 60.

En particulier, comme illustré sur l'exemple de la figure 3, la surface externe 66B de la deuxième partie électrochimiquement active 66 de l'électrode positive 60 est recouverte par une portion du séparateur 90 qui recouvre également la surface externe 34B de la première partie électrochimiquement active 34 de l'électrode négative 30 d'une circonvolution radialement interne de l'ensemble plat 22 enroulé.

Avantageusement, comme illustré sur l'exemple de la figure 3, le séparateur 90 est positionné entre l'électrode positive 60 et l'électrode négative 30 de sorte à être interposé entre les parties électrochimiquement actives 34, 36 et la partie principale de connexion électrique 32 d'une part et les parties électrochimiquement actives 64, 66 et la partie principale de connexion électrique 62 d'autre part.

Encore avantageusement, toujours en référence à la figure 3, le séparateur 90 présente une forme de profilé en M agencé entre la forme de profilé en U de l'électrode négative 30 et la forme de profilé en U de l'électrode positive 60 agencées en quinconce.

Le séparateur 90 isole électroniquement l'électrode positive 60 de l'électrode négative 30.

Par exemple, le séparateur 90 est réalisé en un matériau choisi parmi les matériaux suivants : une polyoléfine, par exemple le polypropylène PP, le polyéthylène PE, un polyester, les fibres de verre liées par un polymère, le polyimide, le polyamide, le polyaramide, le polyamide-imide et la cellulose. Le polyester est par exemple choisi parmi le poly(téréphtalate d'éthylène) (PET) et le poly(téréphtalate de butylène) (PBT). Avantageusement, le polyester ou polypropylène ou polyéthylène contient ou est revêtu par un matériau céramique choisi dans le groupe constitué par les oxydes, oxyhydroxydes, carbures, nitrures, borures, siliciures et sulfures métalliques. Par exemple, ce matériau céramique est $SiO_2$ ou $Al_2O_3$. Par exemple, le séparateur est une couche de polyoléfine revêtue de céramique, de préférence une couche de polyéthylène revêtue de céramique sur les deux côtés.

En référence à la figure 1, le premier organe de connexion électrique 92 est agencé à une première extrémité 12A du conteneur 12 selon l'axe central A-A' et le deuxième organe de connexion électrique 94 est agencé à une deuxième extrémité 12B du conteneur 12 selon l'axe central A-A', opposée à la première extrémité 12A.

En référence à l'exemple de la figure 1, les premier et deuxième organes de connexion électrique 92, 94 sont des pièces en forme de disque plat réalisés en matériau conducteur, par exemple en cuivre, alliage de cuivre, aluminium, alliage d'aluminium, acier ou acier inoxydable. En particulier, le premier organe de connexion électrique 92 est réalisé en le même matériau que celui du premier feuillard métallique 40 et le deuxième organe de connexion électrique 94 est réalisé en le même matériau que celui du deuxième feuillard métallique 70.

Les premier et deuxième organes de connexion électrique 92, 94 sont destinés à être connectés à des bornes négatives et positives de l'élément électrochimique 10.

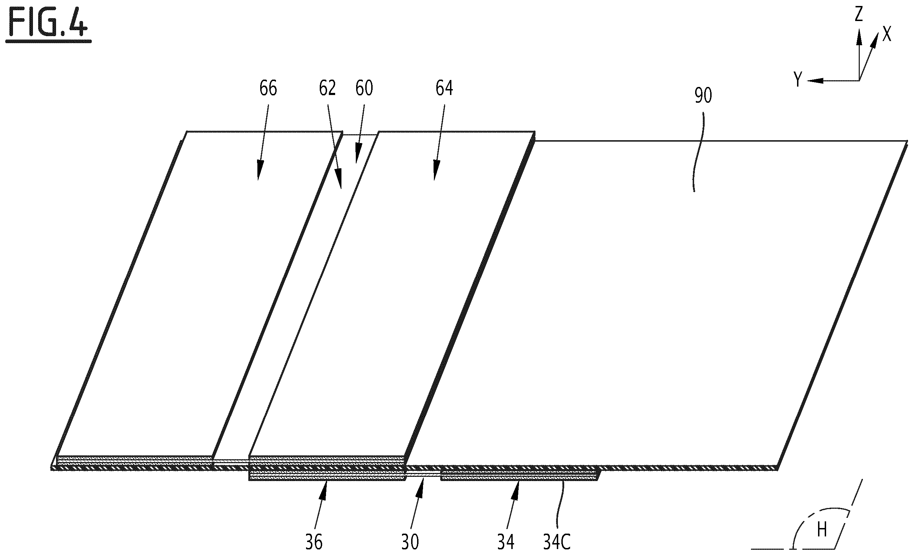

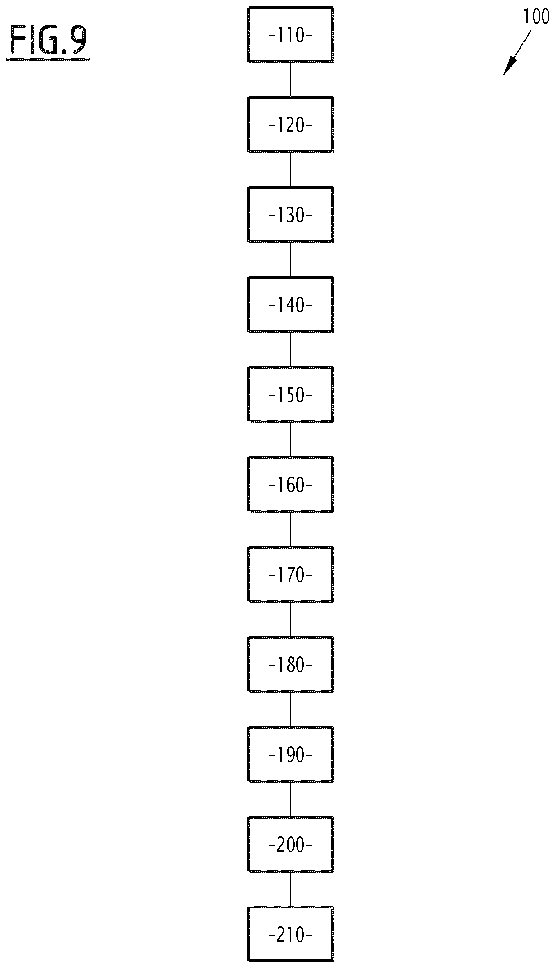

En référence aux figures 4 à 9, on décrit un procédé 100 de fabrication de l'élément électrochimique 10.

En référence à la figure 4, le procédé 100 comprend une étape a) de fourniture 110 du conteneur 12, de l'électrode négative 30, de l'électrode positive 60 et du séparateur 90, l'électrode négative 30, l'électrode positive 60 et le séparateur 90 étant chacun sous une forme plane.

Avantageusement, l'électrode négative 30, l'électrode positive 60 et le séparateur 90 sont chacun plan. En d'autres termes, l'électrode négative 30, l'électrode positive 60 et le séparateur 90 s'étendent chacun selon trois dimensions, l'une de ces trois dimensions (correspondant sur la figure 4 à une direction d'élévation Z) étant très inférieure aux deux autres dimensions (appelée correspondant sur la figure 4 à des directions longitudinale X et transversale Y), notamment plus de 10 fois inférieure aux deux autres dimensions, en particulier plus de 100 fois inférieure aux deux autres dimensions, de préférence plus de 1 000 fois inférieure aux deux autres dimensions.

Encore avantageusement, l'électrode négative 30, l'électrode positive 60 et le séparateur 90 présentent chacun une forme rectangulaire, une longueur mesurée selon la direction longitudinale X, une largeur mesurée selon la direction transversale Y et une épaisseur mesurée selon la direction d'élévation Z. En particulier, pour chacun de l'électrode négative 30, l'électrode positive 60 et le séparateur 90, l'épaisseur est très inférieure à la longueur et à la largeur.

Selon l'exemple de la figure 4 :

- les longueurs de l'électrode négative 30, l'électrode positive 60 et le séparateur sont sensiblement égales ;
- les largeurs de l'électrode négative 30 et l'électrode positive 60 sont sensiblement égales ;
- la largeur du séparateur 90 est supérieure ou égale à deux fois la largeur de l'électrode négative 30 ou de l'électrode positive 60, notamment sensiblement égale à deux fois la largeur de l'électrode négative ou de l'électrode positive 60 ; et/ou
- les épaisseurs de l'électrode négative 30 et l'électrode positive 60 sont sensiblement égales.

Le procédé 100 comprend ensuite une étape b) d'agencement 120 de l'électrode négative 30 de sorte que l'électrode négative 30 s'étende selon un plan horizontal H défini par la direction longitudinale X et la direction transversale Y, comme illustré sur la figure 4.

Toujours en référence à la figure 4, le procédé 100 comprend ensuite une étape c) d'agencement 130 du séparateur 90 sur l'électrode négative 30 de sorte que :

- l'électrode négative 30 s'étende sensiblement parallèlement au plan horizontal H, les parties électrochimiquement actives 34, 36 de l'électrode négative 30 s'étendant de part et d'autre de la partie principale de connexion électrique 32 de l'électrode négative 30 selon la direction transversale Y ;
- le séparateur 90 soit empilé sur l'électrode négative 30 selon la direction d'élévation Z perpendiculaire aux directions longitudinale X et transversale Y ; et

- l'électrode négative 30 soit centrée selon la direction transversale Y par rapport au séparateur 90.

Toujours en référence à la figure 4, le procédé 100 comprend ensuite une étape d) d'agencement 140 de l'électrode positive 60 sur le séparateur 90 de sorte que :

- l'électrode positive 60 s'étende sensiblement parallèlement au plan horizontal H, les parties électrochimiquement actives 64, 66 de l'électrode positive 60 s'étendant de part et d'autre de la partie principale de connexion électrique 62 de l'électrode positive 60 selon la direction transversale Y ;
- l'électrode positive 60 soit empilée sur le séparateur 90 ; et
- la première partie électrochimiquement active 64 de l'électrode positive 60 soit agencée en regard de la deuxième partie électrochimiquement active 36 de l'électrode négative 30.

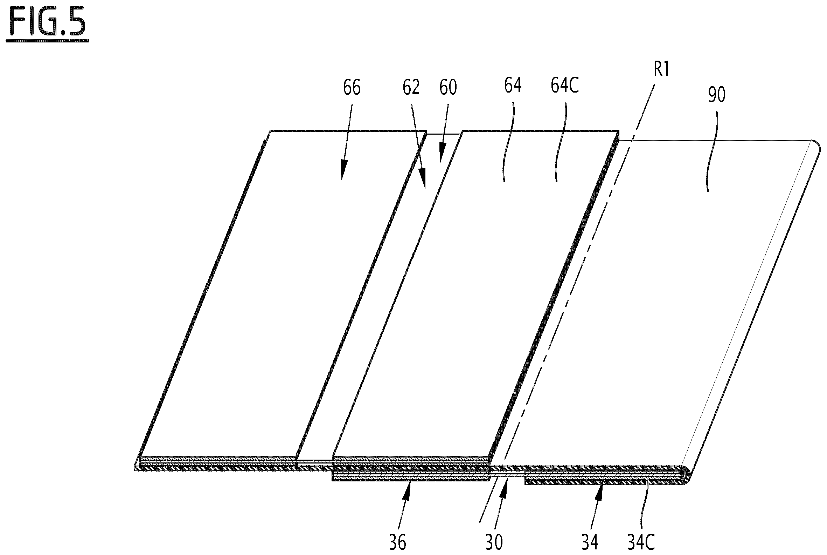

Avantageusement, en référence à la figure 5, le procédé 100 comprend ensuite une étape de rabattement 150 d'une portion du séparateur 90 sur une surface inférieure 34C de la première partie électrochimiquement active 34 de l'électrode négative 30, la surface inférieure 34C de la première partie électrochimiquement active 34 de l'électrode négative 30 correspondant à la surface externe 34B de la première partie électrochimiquement active 34 de l'électrode négative 30.

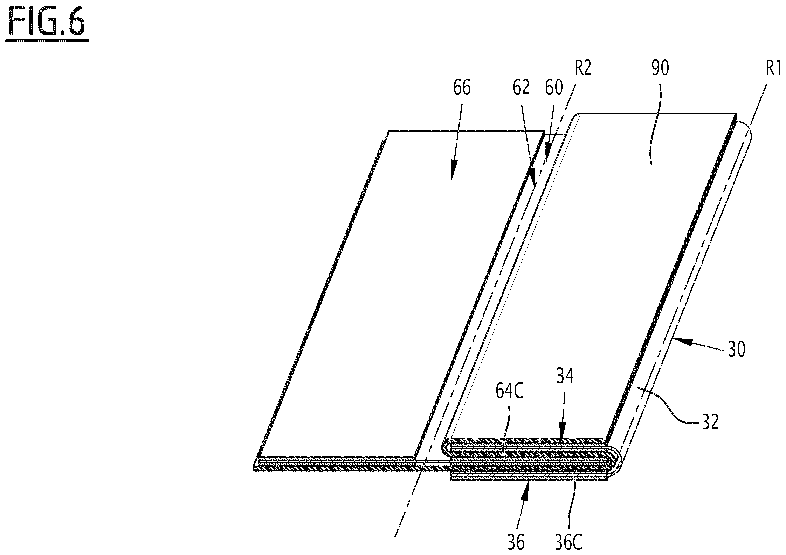

En référence à la figure 6, le procédé 100 comprend ensuite une étape e) de rabattement 160 de la première partie électrochimiquement active 34 de l'électrode négative 30 sur la première partie électrochimiquement active 64 de l'électrode positive 60 par rotation de la première partie électrochimiquement active 34 de l'électrode négative 30 selon un premier axe de rotation R1 sensiblement parallèle à la direction longitudinale X, de sorte que la première partie électrochimiquement active 62 de l'électrode positive 60 s'étende dans l'espace intermédiaire 38 d'électrode négative 30.

Avantageusement, lors de l'étape e), la première partie électrochimiquement active 34 de l'électrode négative 30 et une portion de séparateur 90 correspondante sont rabattues conjointement sur la première partie électrochimiquement active 64 de l'électrode positive 60, de sorte que le séparateur 90 recouvre une surface supérieure 64C de la première partie électrochimiquement active 64 de l'électrode positive 60 correspondant à la surface externe 64B de la première partie électrochimiquement active 64 de l'électrode positive 60.

En référence à la figure 7, le procédé 100 comprend ensuite une étape f) de rabattement 170 de la deuxième partie électrochimiquement active 66 de l'électrode positive 60 sur la deuxième partie électrochimiquement active 36 de l'électrode négative 30 par rotation de la deuxième partie électrochimiquement active 66 de l'électrode positive 60 selon un deuxième axe de rotation R2 sensiblement parallèle à la direction longitudinale X de sorte que la deuxième partie électrochimiquement active 36 de l'électrode négative 30 s'étende dans l'espace intermédiaire 68 d'électrode positive 60.

Avantageusement, lors de l'étape f), la deuxième partie électrochimiquement active 66 de l'électrode positive 60 et une portion de séparateur 90 correspondante sont rabattues conjointement sur la deuxième partie électrochimiquement active 36 de l'électrode négative 30, de sorte que le séparateur 90 recouvre une surface inférieure 36C de la deuxième partie électrochimiquement active 36 de l'électrode négative 30 correspondant à une surface externe 36B de la deuxième partie électrochimiquement active 36 de l'électrode négative 30.

Encore avantageusement, les étapes e) et f) sont telles que :

- la partie principale de connexion électrique 32 de l'électrode négative 30 comprend :

  - la première surface 32A orientée vers l'espace intermédiaire 38 d'électrode négative 30 ; et
  - la deuxième surface 32B opposée à la première surface 32A ;

- la partie principale de connexion électrique 62 de l'électrode positive 60 comprend :

  - une première surface 62A orientée vers l'espace intermédiaire 68 d'électrode positive 60 ; et
  - une deuxième surface 62B opposée à la première surface 62A.

En particulier, comme décrit ci-dessous plus en détails, le procédé 100 est tel que la deuxième surface 32B de la partie principale de connexion électrique 32 de l'électrode négative 30 est en contact électrique avec le premier organe de connexion électrique 92 et la deuxième surface 62B de la partie principale de connexion électrique 62 de l'électrode positive 60 est en contact électrique avec le deuxième organe de connexion électrique 94.

Avantageusement, le procédé 100 comprend ensuite entre l'étape f) et une étape g) décrite ci-dessous, l'étape suivante 180 dont le résultat est illustré sur la figure 8 : une portion rectangulaire 80 de la deuxième partie électrochimiquement active 66 de l'électrode positive 60 est découpée depuis le bord interne 22A de l'ensemble plat 22 de sorte qu'un bord interne 24A de la surface orthoradiale interne 24 de l'ensemble plat 22 soit formé par le séparateur 90. En variante, l'étape 180 est réalisée avant l'étape f). Notamment, l'homme du métier comprendra que l'étape 180 peut être réalisée n'importe quand avant l'étape f).

Bien entendu, l'homme du métier comprendra que les étapes de rabattement 160, 170, le cas échéant 150, peuvent être réalisées dans un ordre différent de celui décrit ci-dessus mais aboutissement tout de même à l'élément électrochimique 10.

Le procédé 100 comprend ensuite l'étape g) d'enroulement 190 de l'ensemble plat 22 en spirale autour d'un axe de rotation principal RP sensiblement parallèle à la direction transversale Y. Par exemple, lors de l'étape d'enroulement 190, l'ensemble plat 22 est enroulé en spirale autour d'un support de forme cylindrique notamment à section droite circulaire. Par exemple, le support est retiré une fois que l'enroulement 190 est terminé. En variante, après que l'enroulement 190 soit terminé, le support est gardé à l'intérieur de l'ensemble plat 22 enroulé en spirale et fait alors partie de l'élément électrochimique 10 final.

Le procédé 100 comprend ensuite une étape h) d'agencement 200 de l'ensemble plat 22 enroulé en spirale dans le volume intérieur 16 du conteneur 12 de sorte que l'axe de rotation principal RP soit sensiblement parallèle à l'axe central A-A' du conteneur 12.

Avantageusement, après l'étape h), l'ensemble plat 22 du faisceau électrochimique 20 s'étend entre le bord interne 22A orienté vers l'axe central A-A' et le bord externe 22B opposé au bord interne 22A.

Avantageusement, le procédé 100 comprend ensuite une étape i) de connexion électrique 210 de la deuxième surface 32B de la partie principale de connexion électrique 32 de l'électrode négative 30 avec le premier organe de connexion électrique 92 et de connexion électrique de la deuxième surface 62B de la partie principale de connexion électrique 62 de l'électrode positive 60 avec le deuxième organe de connexion électrique 94.

Par exemple, l'étape i) de connexion électrique est réalisée par maintien en force des organes de connexion électrique 92, 94 sur les deuxièmes surfaces 32B, 62B respectives comme illustré sur la figure 1.

En variante, l'étape i) de connexion électrique est réalisée par soudage des organes de connexion électrique 92, 94 sur les deuxièmes surfaces 32B, 62B respectives.

Selon un exemple particulier, les étapes de rabattement 150, 160, 170 sont réalisées de la façon suivante :

- l'ensemble obtenu après l'étape 140 et comprenant l'électrode négative 30, l'électrode positive 60 et le séparateur 90 est disposé sur une série de rouleaux de support s'étendant selon la direction transversale Y ;
- l'ensemble est déplacé sur les rouleaux de support selon une direction d'avancement sensiblement parallèle à la direction longitudinale X ;
- les portions à rabattre sont progressivement rabattues au fur et à mesure du déplacement de l'ensemble selon la direction d'avancement, par des rouleaux de tension formant respectivement et successivement selon la direction d'avancement un angle de 45°, puis de 90°, puis de 135°, puis de 180° avec la direction transversale Y.

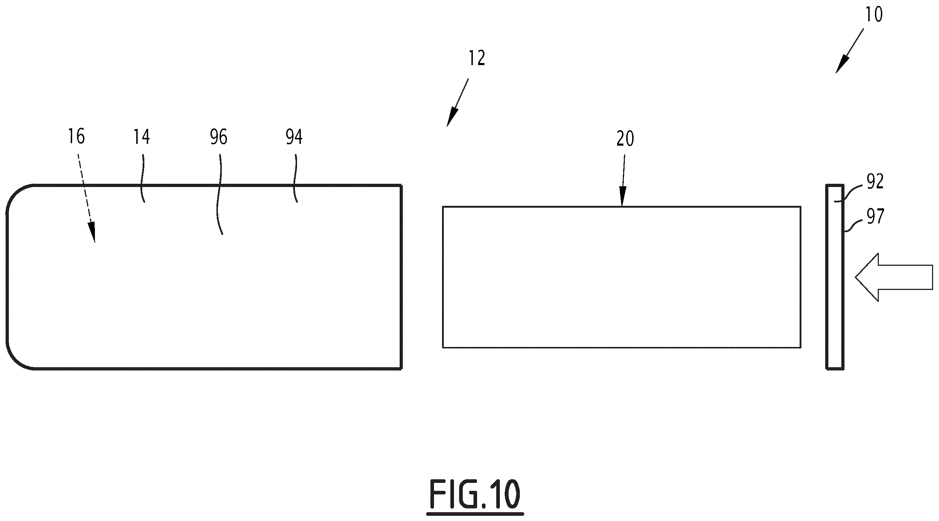

En référence à la figure 10, on décrit un deuxième mode de réalisation d'un élément électrochimique 10 selon l'invention.

Le deuxième mode de réalisation est similaire au premier mode de réalisation décrit ci-dessus, à l'exception des différences suivantes.

Le conteneur 12 est formé par un caisson 96 comportant la paroi tubulaire externe 14 et un couvercle 97 obturant une ouverture d'accès au volume intérieur 16.

Le premier organe de connexion électrique 92 est formé par le couvercle 97 et le deuxième organe de connexion électrique 94 est formé par le caisson 96.

Le procédé de fabrication est similaire à celui décrit ci-dessus.

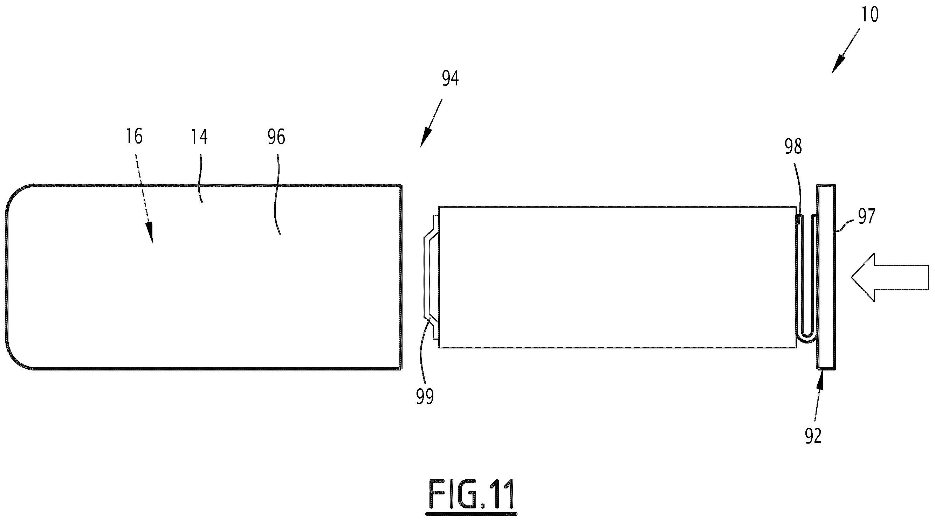

En référence à la figure 11, on décrit un troisième mode de réalisation d'un élément électrochimique selon l'invention.

Le troisième mode de réalisation est similaire au premier mode de réalisation décrit ci-dessus, à l'exception des différences suivantes.

Le conteneur 12 est formé par un caisson 96 comportant la paroi tubulaire externe 14 et un couvercle 97 obturant une ouverture d'accès au volume intérieur 16.

Le premier organe de connexion électrique 92 est formé par le couvercle 97 et une pièce de connexion électrique 98 reliant électriquement le couvercle 97 et le faisceau électrochimique 20.

Le deuxième organe de connexion électrique 94 est formé par le caisson 96 et une pièce de connexion électrique 99 reliant électriquement le caisson 96 et le faisceau électrochimique 20.

Le procédé de fabrication est similaire à celui décrit ci-dessus.

Dans ce qui suit, on décrit en outre un quatrième mode de réalisation non illustré, similaire au premier mode de réalisation décrit ci-dessus, à l'exception des différences suivantes.

L'élément électrochimique 10 est de type prismatique.

La paroi tubulaire externe 14 est une paroi cylindrique à section droite carrée, rectangulaire ou squircle (forme mathématique intermédiaire entre un carré et un cercle).

Le procédé de fabrication est similaire à celui décrit ci-dessus, excepté les différences suivantes.

Après l'enroulement, le support utilisé lors de l'enroulement 190 est retiré. Après que le support utilisé lors de l'étape d'enroulement 190 ait été retiré et avant l'étape h) d'agencement 200, l'ensemble plat 22 enroulé en spirale est aplati pour lui donner sensiblement une forme de pavé apte à être insérée dans la paroi tubulaire externe 14.

En particulier, dans ce mode de réalisation, le diamètre du support sur lequel est enroulé l'ensemble plat 22 est suffisamment grand pour permettre un aplatissement de l'ensemble plat 22 enroulé.

Grâce à l'invention, une meilleure isolation électrique des électrodes l'une par rapport à l'autre est obtenue, tout en évitant d'avoir recours à un surdimensionnement d'une électrode par rapport à l'autre. En effet, dans la présente invention, l'électrode négative et l'électrode positive présentent des dimensions sensiblement identiques.

L'agencement en quinconce permet notamment d'éviter les risques de courts-circuits. En effet, les efforts longitudinaux (c'est-à-dire le long de l'axe central A-A') sur les électrodes n'entraînent pas de court-circuit puisque le séparateur, agencé entre les électrodes, assure une isolation électrique suffisante et ce malgré tout éventuel rapprochement d'une électrode par rapport à l'autre. En effet, en référence à la figure 3, par exemple, la partie principale de connexion électrique 32 de l'électrode négative 30, notamment la portion centrale 42 du premier feuillard métallique 42, et la deuxième partie électrochimiquement active 66 de l'électrode positive 60, notamment un bord libre de la deuxième partie électrochimiquement active 66 (c'est-à-dire l'extrémité de la deuxième partie électrochimiquement active 66 opposée à la partie principale de connexion électrique 62), sont séparées par le séparateur 90 et un effort longitudinal appliqué sur la partie principale de connexion électrique 32 n'entraîne pas de court-circuit entre la partie principale de connexion électrique 32 et la deuxième partie électrochimiquement active 66.

La suppression du surdimensionnement (qui était auparavant prévu par exemple pour augmenter la distance entre le collecteur de courant de l'électrode négative et toute partie de l'électrode positive) permet alors d'augmenter la densité d'énergie de l'élément électrochimique.

## Revendications

**1.** Elément électrochimique (10) comprenant :

- un conteneur (12) s'étendant selon un axe central (A-A'), le conteneur (12) comportant une paroi tubulaire externe (14) s'étendant autour de l'axe central (A-A') et délimitant un volume intérieur (16) ; et
- un faisceau électrochimique (20) reçu dans le volume intérieur (16), comportant un ensemble plat (22) enroulé en spirale autour de l'axe central (A-A'), l'ensemble plat (22) comprenant :

- une électrode négative (30) ;
- une électrode positive (60) ; et
- un séparateur (90) séparant l'électrode négative (30) et l'électrode positive (60) ;

**caractérisé en ce que** :

- l'électrode négative (30) présente une forme de profilé en U et comporte :

- une partie principale de connexion électrique (32) formant une base dudit U et s'étendant sensiblement perpendiculairement à l'axe central (A-A') ;
- une première partie électrochimiquement active (34) formant une première branche dudit U et s'étendant sensiblement parallèlement à l'axe central (A-A') ; et
- une deuxième partie électrochimiquement active (36) formant une deuxième branche dudit U et s'étendant sensiblement parallèlement à la première partie électrochimiquement active (34) de l'électrode négative (30) ;

les première et deuxième parties électrochimiquement active (34, 36) de l'électrode négative (30) délimitant entre elles un espace intermédiaire (38) d'électrode négative (30) ;

- l'électrode positive (60) présente une forme de profilé en U et comporte :

- une partie principale de connexion électrique (62) formant une base dudit U et s'étendant sensiblement perpendiculairement à l'axe central (A-A') ;
- une première partie électrochimiquement active (64) formant une première branche dudit U et s'étendant sensiblement parallèlement à l'axe central (A-A') ; et
- une deuxième partie électrochimiquement active (66) formant une deuxième branche dudit U et s'étendant sensiblement parallèlement à la première partie électrochimiquement active (64) de l'électrode positive (60) ;

les première et deuxième parties électrochimiquement actives (64, 66) de l'électrode positive (60) délimitant entre elles un espace intermédiaire (68) d'électrode positive (60) ;

- la première partie électrochimiquement active (64) de l'électrode positive (60) s'étend dans l'espace intermédiaire (38) d'électrode négative (30) et la deuxième partie électrochimiquement active (36) de l'électrode négative (30) s'étend dans l'espace intermédiaire (68) d'électrode positive (60) ; et
- la deuxième partie électrochimiquement active (66) de l'électrode positive (60) présente une surface orthoradiale interne (24) de l'ensemble plat (22) orientée vers l'axe central (A-A').

**2.** Elément électrochimique (10) selon la revendication 1, dans lequel les première et deuxième parties électrochimiquement actives (34, 36) de l'électrode négative (30), les première et deuxième parties électrochimiquement actives (64, 66) de l'électrode positive (60) et le séparateur (90) sont appliqués les uns contre les autres selon une direction radiale (R) perpendiculaire à l'axe central (A-A').

**3.** Elément électrochimique (10) selon la revendication 1 ou 2, dans lequel :

- les première et deuxième parties électrochimiquement actives (34, 36) de l'électrode négative (30) comprennent chacune une surface interne (34A, 36A) orientée vers l'espace intermédiaire (38) d'électrode négative (30) et une surface externe (34B, 36B) opposée à la surface interne (34A, 36A) ; et
- le séparateur (90) s'étend entre l'électrode positive (60) et l'électrode négative (30) de sorte à recouvrir la surface externe (34B) de la première partie électrochimiquement active (34) de l'électrode négative (30), la surface interne (34A) de la première partie électrochimiquement active (34) de l'électrode négative (30), la surface interne (36A) de la deuxième partie électrochimiquement active (36) de l'électrode négative (30) et la surface externe (36B) de la deuxième partie électrochimiquement active (36) de l'électrode négative (30).

**4.** Elément électrochimique (10) selon l'une quelconque des revendications précédentes, dans lequel :

- la première partie électrochimiquement active (64) de l'électrode positive (60) s'étend dans l'espace intermédiaire (38) d'électrode négative (30) de sorte que le séparateur (90) soit interposé entre la première partie électrochimiquement active (64) de l'électrode positive (60) et chacune des première et deuxième parties électrochimiquement active (34, 36) de l'électrode négative (30) ;
- la deuxième partie électrochimiquement active (36) de l'électrode négative (30) s'étend dans l'espace intermédiaire (68) d'électrode positive (60) de sorte que le séparateur (90) soit interposé entre la deuxième partie électrochimiquement active (36) de l'électrode négative (30) et chacune des première et deuxième parties électrochimiquement actives (64, 66) de l'électrode positive (60).

**5.** Elément électrochimique (10) selon l'une quelconque des revendications précédentes, dans lequel :

- la partie principale de connexion électrique (32) de l'électrode négative (30) comprend :

- une première surface (32A) orientée vers l'espace intermédiaire (38) d'électrode négative (30) ; et
- une deuxième surface (32B) opposée à la première surface (32A), ladite deuxième surface (32B) étant en contact électrique avec un premier organe de connexion électrique (92) de l'élément électrochimique (10) ;

- la partie principale de connexion électrique (62) de l'électrode positive (60) comprend :

- une première surface (62A) orientée vers l'espace intermédiaire (68) d'électrode positive (60) ; et
- une deuxième surface (62B) opposée à la première surface (62A), ladite deuxième surface (62B) étant en contact électrique avec un deuxième organe de connexion électrique (94) de l'élément électrochimique (10).

**6.** Elément électrochimique (10) selon la revendication 5, comprenant le premier organe de connexion électrique (92) et le deuxième organe de connexion électrique (94), le premier organe de connexion électrique (92) étant agencé à une première extrémité (12A) du conteneur (12) selon l'axe central (A-A'), le deuxième organe de connexion électrique (94) étant agencé à une deuxième extrémité (12B) du conteneur (12) selon l'axe central (A-A'), opposée à la première extrémité (12A).

**7.** Elément électrochimique (10) selon l'une quelconque des revendications précédentes, dans lequel :

- l'électrode négative (30) comprend :

- un premier feuillard métallique (40) formant un collecteur de courant de l'électrode négative (30), présentant une forme de profilé en U et comprenant :

- une portion centrale (42) formant la partie principale de connexion électrique (32) de l'électrode négative (30) ; et
- deux portions latérales (44, 46) formant respectivement au moins partiellement les première et deuxième parties électrochimiquement actives (34, 36) de l'électrode négative (30) ;

- une première couche de matière électrochimiquement active (48) recouvrant au moins partiellement les deux portions latérales (44, 46) du premier feuillard métallique (40) et formant au moins partiellement les première et deuxième parties électrochimiquement active (34, 36) de l'électrode négative (30) ;

- l'électrode positive (60) comprend :

- un deuxième feuillard métallique (70) formant un collecteur de courant de l'électrode positive (60), présentant une forme de profilé en U et comprenant :

- une portion centrale (72) formant la partie principale de connexion électrique (62) de l'électrode positive (60) ; et
- deux portions latérales (74, 76) formant respectivement au moins partiellement les première et deuxième parties électrochimiquement actives (64, 66) de l'électrode positive (60) ;

- une deuxième couche de matière électrochimiquement active (78) recouvrant au moins partiellement les deux portions latérales (74, 76) du deuxième feuillard métallique (70) et formant au moins partiellement les première et deuxième parties électrochimiquement actives (64, 66) de l'électrode positive (60).

8. Elément électrochimique (10) selon l'une quelconque des revendications précédentes, dans lequel l'ensemble plat (22) présente une surface orthoradiale externe (26) opposée à la surface orthoradiale interne (24) de l'ensemble plat, la surface orthoradiale externe (26) de l'ensemble plat (22) étant formée par une portion du séparateur (90).

9. Elément électrochimique (10) selon l'une quelconque des revendications précédentes, dans lequel :

- l'ensemble plat (22) du faisceau électrochimique (20) s'étend entre un bord interne (22A) orienté vers l'axe central (A-A') et un bord externe (22B) opposé au bord interne (22A) ; et
- une portion rectangulaire (80) de la deuxième partie électrochimiquement active (66) de l'électrode positive (60) étant découpée depuis le bord interne (22A) de l'ensemble plat (22) de sorte qu'un bord interne (24A) de la surface orthoradiale interne (24) de l'ensemble plat (22) soit formé par le séparateur (90).

10. Procédé (100) de fabrication d'un élément électrochimique (10) selon l'une quelconque des revendications précédentes, comprenant les étapes suivantes :

a) fourniture (110) du conteneur (12), de l'électrode négative (30), de l'électrode positive (60) et du séparateur (90), l'électrode négative (30), l'électrode positive (60) et le séparateur (90) étant chacun sous une forme plane ;
b) agencement (120) de l'électrode négative (30) de sorte que l'électrode négative (30) s'étende selon un plan horizontal (H) défini par une direction longitudinale (X) et une direction transversale (Y) ;
c) agencement (130) du séparateur (90) sur l'électrode négative (30) de sorte que :

- l'électrode négative (30) s'étende sensiblement parallèlement au plan horizontal (H), les parties électrochimiquement actives (34, 36) de l'électrode négative (30) s'étendant de part et d'autre de la partie principale de connexion électrique (32) de l'électrode négative (30) selon la direction transversale (Y) ;
- le séparateur (90) soit empilé sur l'électrode négative (30) selon une direction d'élévation (Z) perpendiculaire aux directions longitudinale (X) et transversale (Y) ; et
- l'électrode négative (30) soit centrée selon la direction transversale (Y) par rapport au séparateur (30) ;

d) agencement (140) de l'électrode positive (60) sur le séparateur (90) de sorte que :

- l'électrode positive (60) s'étende sensiblement parallèlement au plan horizontal (H), les parties électrochimiquement actives (64, 66) de l'électrode positive (60) s'étendant de part et d'autre de la partie principale de connexion électrique (62) de l'électrode positive (60) selon la direction transversale (Y) ;
- l'électrode positive (60) soit empilée sur le séparateur (90) ; et
- la première partie électrochimiquement active (64) de l'électrode positive (60) soit agencée en regard de la deuxième partie électrochimiquement active (36) de l'électrode négative (30) ;

e) rabattement (160) de la première partie électrochimiquement active (34) de l'électrode négative (30) sur la première partie électrochimiquement active (64) de l'électrode positive (60) par rotation de la première partie électrochimiquement active (34) de l'électrode négative (30) selon un premier axe de rotation (R1) sensiblement parallèle à la direction longitudinale (X), de sorte que la première partie électrochimiquement active (64) de l'électrode positive (60) s'étende dans l'espace intermédiaire (38) d'électrode négative (30) ;

f) rabattement (170) de la deuxième partie électrochimiquement active (66) de l'électrode positive (60) sur la deuxième partie électrochimiquement active (36) de l'électrode négative (30) par rotation de la deuxième partie électrochimiquement active (66) de l'électrode positive (60) selon un deuxième axe de rotation (R2) sensiblement parallèle à la direction longitudinale (X) de sorte que la deuxième partie électrochimiquement active (36) de l'électrode négative (30) s'étende dans l'espace intermédiaire (68) d'électrode positive (60) ;

g) enroulement (190) de l'ensemble plat (22) en spirale autour d'un axe de rotation principal (RP) sensiblement parallèle à la direction transversale (Y) ;

h) agencement (200) de l'ensemble plat (22) enroulé dans le volume intérieur (16) du conteneur (12) de sorte que l'axe de rotation principal (RP) soit sensiblement parallèle à l'axe central (A-A') du conteneur (12).

11. Procédé de fabrication (100) selon la revendication 10, dans lequel le procédé comprend en outre :

- entre les étapes d) et e), une étape de rabattement (150) d'une portion du séparateur (90) sur une surface inférieure (34C) de la première partie électrochimiquement active (34) de l'électrode négative (30), la surface inférieure (34C) de la première partie électrochimiquement active (34) de l'électrode négative (30) correspondant à une surface externe (34B) de la première partie électrochimiquement active (34) de l'électrode négative (30), opposée à une surface interne (34A) de la première partie électrochimiquement active (34) de l'électrode négative (30) orientée vers l'espace intermédiaire (38) d'électrode négative (30).

12. Procédé de fabrication (100) selon la revendication 11, dans lequel lors de l'étape e), la première partie électrochimiquement active (34) de l'électrode négative (30) et une portion de séparateur (90) correspondante sont rabattues sur la première partie électrochimiquement active (64) de l'électrode positive (60), de sorte que le séparateur (90) recouvre une surface supérieure (64C) de la première partie électrochimiquement active (64) de l'électrode positive (60) correspondant à une surface externe (64B) de la première partie électrochimiquement active (64) de l'électrode positive (60), opposée à une surface interne (64A) de la première partie électrochimiquement active (64) de l'électrode positive (60) orientée vers l'espace intermédiaire (68) d'électrode positive (60).

13. Procédé de fabrication (100) selon la revendication 12, dans lequel lors de l'étape f), la deuxième partie électrochimiquement active (66) de l'électrode positive (60) et une portion de séparateur (90) correspondante sont rabattues sur la deuxième partie électrochimiquement active (36) de l'électrode négative (30), de sorte que le séparateur (90) recouvre une surface inférieure (36C) de la deuxième partie électrochimiquement active (36) de l'électrode négative (30) correspondant à une surface externe (36B) de la deuxième partie électrochimiquement active (36) de l'électrode négative (30), opposée à une surface interne (36A) de la deuxième partie électrochimiquement active (36) de l'électrode négative (30) orientée vers l'espace intermédiaire (38) d'électrode négative (30).

14. Procédé de fabrication (100) selon l'une quelconque des revendications 10 à 13, dans lequel les étapes e) et f) sont telles que :

- la partie principale de connexion électrique (32) de l'électrode négative (30) comprend :

- une première surface (32A) orientée vers l'espace intermédiaire (38) d'électrode négative (30) ; et
- une deuxième surface (32B) opposée à ladite première surface (32A), ladite deuxième surface (32B) étant en contact électrique avec un premier organe de connexion électrique (92) de l'élément électrochimique (10) ;

- la partie principale de connexion électrique (62) de l'électrode positive (60) comprend :

- une première surface (62A) orientée vers l'espace intermédiaire (68) d'électrode positive (60) ; et
- une deuxième surface (62B) opposée à ladite première surface (62A), ladite deuxième surface (62B) étant en contact électrique avec un deuxième organe de connexion électrique (94) de l'élément électrochimique (10) ;

le procédé (100) étant en outre tel que la deuxième surface (32B) de la partie principale de connexion électrique (32) de l'électrode négative (30) est en contact électrique avec le premier organe de connexion électrique (92) de l'élément électrochimique (10) et la deuxième surface (62B) de la partie principale de connexion électrique (62) de l'électrode positive (60) est en contact électrique avec le deuxième organe de connexion électrique (94) de l'élément électrochimique (10).

15. Procédé de fabrication (100) selon l'une quelconque des revendications 10 à 14, dans lequel après l'étape h), l'ensemble plat (22) du faisceau électrochimique (10) s'étend entre un bord interne (22A) orienté vers l'axe central (A-A') et un bord externe (22B) opposé au bord interne (22A), et
dans lequel entre les étapes f) et g), une portion rectangulaire (80) de la deuxième partie électrochimiquement active (66) de l'électrode positive (60) est découpée depuis le bord interne (22A) de l'ensemble plat (22) de sorte qu'un bord interne (24A) de la surface orthoradiale interne (24) de l'ensemble plat (22) soit formé par le séparateur (90).

EP 4 645 489 A1

FIG.1

FIG.2

FIG.3

EP 4 645 489 A1

FIG.4

FIG.5

FIG.6

FIG.7

FIG.8

FIG.9

100

-110-

-120-

-130-

-140-

-150-

-160-

-170-

-180-

-190-

-200-

-210-

**FIG.10**

**FIG.11**

| | Europäisches Patentamt European Patent Office Office européen des brevets | **RAPPORT DE RECHERCHE EUROPEENNE** | **Numéro de la demande** EP 25 17 3456 |
|---|---|---|---|

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2014/045040 A1 (CHAMI MARIANNE [FR]) 13 février 2014 (2014-02-13) * figures 1, 4-6, 8 * * alinéas [0026], [0027], [0031], [0038] * ----- | 1-15 | INV. H01M10/04 H01M10/0587 H01M50/107 H01M10/0583 |
| A | US 2011/287323 A1 (CHEN JACK [US]) 24 novembre 2011 (2011-11-24) * figures 6A-E * * alinéas [0133] - [0140] * ----- | 1-15 | |

DOMAINES TECHNIQUES RECHERCHES (IPC)

H01M

Le présent rapport a été établi pour toutes les revendications

| Lieu de la recherche | Date d'achèvement de la recherche | Examinateur |
|---|---|---|
| La Haye | 22 septembre 2025 | Lange, Ronny |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 25 17 3456

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-09-2025

| Document brevet cité au rapport de recherche | Date de publication | Membre(s) de la famille de brevet(s) | Date de publication |
|---|---|---|---|
| US 2014045040 A1 | 13-02-2014 | EP 2702630 A1 | 05-03-2014 |
| | | FR 2974674 A1 | 02-11-2012 |
| | | JP 5923594 B2 | 24-05-2016 |
| | | JP 2014515169 A | 26-06-2014 |
| | | KR 20140026504 A | 05-03-2014 |
| | | US 2014045040 A1 | 13-02-2014 |
| | | WO 2012146589 A1 | 01-11-2012 |
| US 2011287323 A1 | 24-11-2011 | AUCUN | |

EPO FORM P0460

Pour tout renseignement concernant cette annexe : voir Journal Officiel de l'Office européen des brevets, No.12/82